# EUROPÄISCHE PATENTSCHRIFT

(11) **EP 0 588 223 B1**
(45) Veröffentlichungstag und Bekanntmachung des Hinweises auf die Patenterteilung: **30.07.1997**
(21) Anmeldenummer: 93114382.0
(22) Anmeldetag: 08.09.1993
(51) Int. Cl.: B32B 27/32

(54) **Verpackungsfolie aus einer Siegelschicht und einer Trägerschicht**
Packaging film comprising a sealing layer and a substrate
Feuille d'emballage constituée d'une couche soudable et un substrat

(30) Priorität: 16.09.1992 DE 4230869
(43) Veröffentlichungstag der Anmeldung: 23.03.1994
(73) Patentinhaber: BASF Aktiengesellschaft, 67063 Ludwigshafen (DE)
(72) Erfinder: Seiler, Erhard, Dr., D-6700 Ludwigshafen (DE); Schoene, Werner, Dr., D-6905 Schriesheim (DE); Ballerstedt, Uwe, D-6700 Ludwigshafen (DE)

(56) Entgegenhaltungen:
- EP-A- 0 217 598
- EP-A- 0 237 213
- EP-A- 0 340 579
- EP-A- 0 538 747
- DE-A- 3 611 341
- DE-A- 3 624 543

## Beschreibung

Die vorliegende Erfindung betrifft eine Verpackungsfolie, enthaltend
a) eine Siegelschicht aus einer Mischung aus 50 bis 80 Gew.-% eines statistischen Terpolymerisats (I) aus 90 bis 97 Gew.-% Propylen, 2 bis 6 Gew.-% Ethylen und 1 bis 6 Gew.-% eines C₄-bis C₁₀-Alk-1-ens und 20 bis 50 Gew.-% wenigstens eines Homopolymerisats des Ethylens mit Dichten von 0,890 bis 0,980 g/cm³ oder eines Copolymerisats des Ethylens mit untergeordneten Anteilen von Vinylacetat oder von C₃- bis C₁₀-Alk-1-enen (II)
b) und eine Trägerschicht aus einem Propylenpolymerisat, welches sowohl vom Terpolymerisat (I) als auch vom Homo- oder Copolymerisat des Ethylens (II) verschieden ist.

Weiterhin betrifft die vorliegende Erfindung ein Verfahren zur Herstellung der erfindungsgemäßen Verpackungsfolie sowie die Verwendung der erfindungsgemäßen Verpackungsfolie im Lebensmittelbereich.

Es ist bekannt, Kunststoffe als Verpackungsmaterialien zu verwenden, da diese leicht verarbeitet werden können, ein geringes Gewicht aufweisen, gegenüber Umwelteinflüssen beständig sind und ihr Aussehen stark verändert werden kann. Von mengenmäßig großer Bedeutung sind dabei insbesondere Polyolefine, speziell Polymerisate des Propylens und des Ethylens. Im Verpackungsbereich werden Kunststoffe vorwiegend in Form von Folien eingesetzt.

In den europäischen Patentschriften EP-B 0178 061 und EP-B 0292 197 werden Verpackungsfolien beschrieben, die aus einer Mischung aus drei verschiedenen Kunststoffen bestehen, einem Ethylenpolymerisat, einem But-1-enpolymerisat und einem Propylenpolymerisat. Diese Verpackungsfolien zeichnen sich u.a. durch gute optische Eigenschaften aus. Darüber hinaus sind sie geeignet, abziehbare dachte Verschlüsse zu bilden.

Weiterhin sind aus der EP-B 0207 626 Verpackungen aus einem Behälter bekannt, die eine Heißsiegelschicht aus verschiedenen Polypropylenharzen enthalten, welche sich vor allem durch ihre deutlich unterschiedlichen Fließfähigkeiten voneinander unterscheiden. Derartige Verpackungen lassen sich relativ leicht versiegeln und werden deshalb insbesondere zur Aufbewahrung von Lebensmitteln eingesetzt.

In EP-A 217 598 wird ein siegelfähiges Laminat aus einer Polypropylen-Trägerschicht a) und zwei Oberflächenschichten b) und c) beansprucht. Als Oberflachenschichten werden in der Beschreibung des Dokumentes auch Blends aus einem Terpolymerisat aus Ethylen, Propylen und But-1-en und einem Copolymerisat aus Ethylen und Propylen offenbart. Dieser Blend ist aber verschieden von der hier vorliegenden Siegelschicht a), da das Copolymerisat aus Ethylen und Propylen des Dokumentes nur zwischen 2 bis 7 Gew.-% Ethylen enthalt.

Verpackungsmaterialien müssen in einigen Anwendungsbereichen bestimmte, oft gegensätzliche Eigenschaften aufweisen, die mit den bisher bekannten Verpackungen nicht immer befriedigend realisiert werden können. An Verpackungsfolien werden beispielsweise teilweise erhebliche Anforderungen hinsichtlich ihrer mechanischen Beständigkeit und ihrer Dichtigkeit gestellt, die sie gleichzeitig mit einer guten Verarbeitbarkeit und einer leichten Abziehfähigkeit erfüllen müssen. Darüber hinaus sollen derartige Verpackungsfolien bereits bei möglichst niedrigen Temperaturen und mit möglichst vielen anderen Folien oder Formteilen siegelbar sein.

Der vorliegenden Erfindung lag daher die Aufgabe zugrunde, den geschilderten Nachteilen abzuhelfen und eine verbesserte Verpackungsfolie zu entwickeln, die sich durch eine hohe mechanische Beständigkeit und eine hohe Dichtigkeit auszeichnet, leicht abziehbar ist und auf möglichst einfache Art versiegelt werden kann.

Demgemäß wurde die eingangsdefinierte neue Verpackungsfolie gefunden.

Bevorzugt enthält die in der erfindungsgemäßen Verpackungsfolie verwendete Siegelschicht a) 60 bis 80 Gew.-% eines statistischen Terpolymerisats (I) und 20 bis 40 Gew.-% wenigstens eines Ethylenpolymerisats (II).

Als statistische Terpolymerisate (I) werden insbesondere solche Terpolymerisate verwendet, die aus 92 bis 95 Gew.-% Propylen, 3 bis 5 Gew.-% Ethylen und 1,5 bis 4 Gew.-% eines C₄-bis C₁₀-Alk-1-ens bestehen. Unter C₄-bis C₁₀-Alk-1-enen sollen dabei bevorzugt But-1-en, Pent-1-en, Hex-1-en, Hept-1-en oder Oct-1-en verstanden werden, wobei sich But-1-en,Hex-1-en oder Oct-1-en als Comonomeres besonders gut eignen. Ein besonders bevorzugtes Comonomeres ist dabei But-1-en.

Die erfindungsgemäß zu verwendenden statistischen Terpolymerisate (I) weisen üblicherweise DSC-Schmelzpunkte von 120 bis 135°C und Schmelzflußindices von 2 bis 12 g/10 min, insbesondere von 4 bis 8 g/10 min, bei 230°C und 2,16 kg, nach DIN 53735 auf.

Die zu diesem Zweck verwendeten statistischen Terpolymerisate (I) sind u.a. durch Ziegler-Natta-Polymerisation mit titan- und magnesiumhaltigen Katalysatoren, durch Polymerisation mit chromhaltigen Phillipskatalysatoren oder durch Polymerisation mit metallocenhaltigen Katalysatoren erhältlich (EP-A 45977, US-A 4857 613, EP-A 323 716). Die Polymerisation der einzelnen Comonomeren kann dabei sowohl in der Gasphase, als auch in einer Suspension oder in Lösung vorgenommen werden. Die Herstellung der statistischen Terpolymerisate (I) erfolgt in den, in der Technik üblichen Polymerisationsreaktoren, beispielsweise in gerührten Autoklaven oder Reaktorkaskaden in diskontinuierlicher, halbkontinuierlicher oder kontinuierlicher Fahrweise.

Ein bevorzugtes Verfahren zur Herstellung der statistischen Terpolymerisate (I) ist die Gasphasenpolymerisation der Comonomere in Anwesenheit von Ziegler-Natta-Katalysatoren. Dabei polymerisiert man ein gasförmiges Gemisch aus Propylen, Ethylen und einem C₄- bis C₁₀-Alk-1-en üblicherweise bei einer Temperatur von 60 bis 90°C, einem Druck von 20 bis 40 bar und einer mittleren Verweilzeit des Reaktionsgemisches von 1 bis 5 Stunden. Bevorzugt sind bei diesem Verfahren Drücke von 20 bis 35 bar, Temperaturen von 60 bis 80°C und mittlere Verweilzeiten des Reaktionsgemisches von 1,5 bis 4 Stunden. Vorzugsweise wird die Gasphasenpolymerisation in einem kontinuierlich betriebenen Rührkessel durchgeführt, der ein Festbett aus feinteiligem Polymerisat enthält, welches üblicherweise durch geeignete Rührvorrichtungen in Bewegung gehalten wird. Bei diesem Verfahren wird das Verhältnis zwischen dem Partialdruck des Propylens einerseits und dem des Ethylens und des C₄- bis C₁₀-Alk-1-ens andererseits vorzugsweise auf 5:1 bis 100:1 eingestellt. Das Verhältnis der Partialdrücke zwischen Ethylen und dem C₄- bis C₁₀-Alk-1-en wiederum liegt in diesem Fall üblicherweise im Bereich von 1:1 bis 50:1.

Zur Herstellung der erfindungsgemäß zu verwendenden Siegelschicht a) werden das statistische Terpolymerisat (I) und das oder die Ethylenpolymerisate (II) in geeigneten Vorrichtungen beispielsweise in Extrudern oder Mischern miteinander vermengt.

Dementsprechend enthält die in der erfindungsgemäßen Verpackungsfolie verwendete Siegelschicht noch wenigstens ein Ethylenpolymerisat (II), wobei unter dieser Bezeichnung sowohl Homopolymerisate des Ethylens als auch Copolymerisate des Ethylens mit anderen Comonomeren verstanden werden. Bevorzugte Homopolymerisate sind sowohl nieder- als auch hochdichte Homopolymerisate des Ethylens mit Dichten von 0,890 bis 0,980 g/cm³. Geeignete Copolymerisate des Ethylens enthalten üblicherweise noch untergeordnete Anteile von ungesättigten Comonomeren, beispielsweise von Vinylacetat oder von C₃- bis C₁₀-Alk-1-enen, beispielsweise von Propylen, But-1-en, Hex-1-en oder Oct-1-en. Besonders bevorzugte Siegelschichten a) enthalten ein Ethylenpolymerisat (II) mit einem Dichtebereich von 0,900 bis 0,935 g/cm³.

Die Herstellung derartiger Ethylenpolymerisate (II) erfolgt üblicherweise durch Niederdruckpolymerisation mit metallhaltigen Katalysatoren oder durch Hochdruckpolymerisation mit radikalisch zerfallenden Initiatoren. Die Polymerisation kann dabei mit den in der Technik üblichen Reaktoren, sowohl in der Gasphase, in Lösung als auch in einer Aufschlämmung diskontinuierlich, halbkontinuierlich oder kontinuierlich durchgeführt werden. Bei solchen Verfahren können neben dem Ethylen noch in untergeordneten Mengen andere Comonomere wie beispielsweise Vinylacetat oder C₃- bis C₁₀-Alk-1-ene mitpolymerisiert werden. Die hier beschriebenen Herstellungsverfahren sind dem Fachmann bekannt.

Die in der Siegelschicht a) verwendeten Ethylenpolymerisate (II) sind u.a. unter dem Handelsnamen Lupolen® von der BASF Aktiengesellschaft erhältlich. In der Siegelschicht a) können auch mehrere verschiedene Ethylenpolymerisate (II) vorhanden sein.

Neben der Siegelschicht a) enthält die erfindungsgemäße Verpackungsfolie noch wenigstens eine Trägerschicht b) aus einem thermoplastischen Polymeren. Die erfindungsgemäße Verpackungsfolie kann auch zwei oder mehrere Trägerschichten b) aus einem, zwei oder mehreren thermoplastischen Polymeren aufweisen.

Unter der Bezeichnung thermoplastische Polymere sollen in diesem Zusammenhang vor allem Polymere wie Polyamide, Polystyrole, Polyester, Polyoxyalkylene, Polyurethane, Polyacrylate, Polyvinylchlorid, Polycarbonate und Polyolefine verstanden werden, wobei Polyolefine bevorzugt als Trägerschichten b) verwendet werden. Besonders bevorzugte Trägerschichten b) bestehen aus Propylenpolymerisaten, beispielsweise aus Propylenhomopolymerisaten oder Copolymerisaten des Propylens mit untergeordneten Anteilen anderer C₂- bis C₁₀-Alk-1-ene. Derartige Propylenpolymerisate weisen üblicherweise Schmelzflußindices von 0,5 bis 15 g/10 min, insbesondere von 1,0 bis 10 g/10 min, nach DIN 53735, bei 230°C und 2,16 kg auf. Diese thermoplastischen Polymere können nach dem Fachmann geläufigen Verfahren hergestellt werden, so daß diesbezüglich auf die einschlägige Literatur verwiesen werden kann.

Die Herstellung der bevorzugt verwendeten Polyolefine kann analog der Herstellung des statistischen Terpolymerisats (I) oder des Ethylenpolymerisats (II) durchgeführt werden.

In der erfindungsgemäßen Verpackungsfolie liegen die Schichtdicken der Siegelschicht a) vorzugsweise im Bereich von 2 bis 20 µm, insbesondere im Bereich von 3 bis 10 µm, und die der Trägerschicht b), die auch aus zwei oder mehreren Trägerschichten b) bestehen kann, vorzugsweise im Bereich von 30 bis 350 µm, insbesondere im Bereich von 70 bis 250 µm.

Sowohl in der Siegelschicht a) als auch in der Trägerschicht b) können noch bis zu 50 Gew.-%, vorzugsweise 10 bis 30 Gew.-% üblicher Füllstoffe wie beispielsweise Kreide, Talkum, Kaolin oder Bariumsulfat enthalten sein. Weiterhin können diesen Schichten a) und b) auch noch Additive wie beispielsweise Stabilisatoren, Gleitmittel, Antioxidantien, Antistatika, UV-Absorber, Viskositätsmodifizierer, Antiblockmittel, Schlagzähmacher, Mattierungsmittel, Flammschutzmittel, Biostabilisatoren, Nukleierungsmittel oder Härter beigemischt werden.

Die Herstellung der erfindungsgemäßen Verpackungsfolie erfolgt üblicherweise durch möglichst flächengleiches Auftragen der Siegelschicht a) auf die Trägerschicht b). Derartige Herstellungsverfahren für mehrschichtige Folien erfolgen üblicherweise nach dem Beschichtungsverfahren, dem Kaschierverfahren oder dem Blas-/Breitschlitz-Coextrusionsverfahren.

Beim Beschichtungsverfahren beispielsweise wird zunächst die zu verwendende Beschichtungsmasse auf eine Trägerbahn aufgetragen, anschließend werden die Arbeitsgänge Gelieren, Kühlen, Abziehen und Aufwickeln durchgeführt. Bei der eigentlichen Coextrusionsbeschichtung wird in einer Beschichtungsanlage mit einem Schmelzefilm, der in einem Extruder aufgeschmolzen und über eine Breitschlitzdüse ausgetragen wird und aus einer oder mehreren Polymerschichten bestehen kann, beschichtet. Der dabei entstehende Verbund aus der Siegelschicht a) und der Trägerschicht b) wird anschließend in einer Kühl-Anpreßwalzen-Einheit abgekühlt und geglättet. Danach erfolgt die Aufwicklung der Verbundbahn in einer entsprechenden Wickelstation.

Beim Kaschierverfahren werden analog dem Beschichtungsverfahren ebenfalls die Arbeitsgänge Auftragen der Beschichtungsmasse auf die Trägerbahn, Glätten und Kühlen, Abziehen und Aufwickeln durchgeführt. Bei der eigentlichen Extrusionskaschierung läßt man eine vorgefertigte Trägerbahn in einen Glättwerkwalzenstuhl, der 3 bis 4 Walzen aufweist, einlaufen. Dabei wird die Trägerbahn vor dem ersten Walzenspalt mit einem Schmelzefilm, der in einem Extruder aufgeschmolzen und über eine Breitschlitzdüse ausgetragen wird, beschichtet. Vor dem zweiten Walzenspalt läßt man eine zweite vorgefertigte Bahn zulaufen. Der dabei entstehende Gesamtverbund wird beim Durchlauf durch den zweiten Walzenspalt geglättet, anschließend gekühlt, abgezogen und in einer Wickelstation aufgewickelt.

Nach dem Blas-oder Breitschlitz-Coextrusionsverfahren werden allgemein zunächst die Mischung der Siegelschicht a) und das thermoplastische Polymer der Trägerschicht b) in unterschiedlichen Extrudern unter geeigneten Bedingungen aufgeschmolzen und anschließend in Form der Schmelzeströme unter Ausformen eines Mehrschichten-Schmelzestroms im Coextrusionswerkszeug zusammengeführt. Danach erfolgt das Austragen, Abziehen und Abkühlen der Mehrschichtenschmelzebahn und das Aufwickeln des Verbundes. Dieses Coextrusionsverfahren wird bevorzugt zur Herstellung der erfindungsgemäßen Verpackungsfolie angewandt. Auf diese Weise können sowohl nicht orientierte oder orientierte Flachfolien als auch Schlauchfolien hergestellt werden.

Derartige Verfahren werden üblicherweise bei Temperaturen von 170 bis 280°C, Drücken von 70 bis 200 bar und mittleren Durchlaufzeiten von 5 bis 20 min. durchgeführt.

Die erfindungsgemäße Verpackungsfolie zeichnet sich insbesondere durch eine gute Verbundhaftung zwischen der Siegelschicht a) und der Trägerschicht b) aus, ohne daß dabei zusätzliche Haftvermittler oder "Primer" mitverwendet werden müssen. Darüber hinaus weist die erfindungsgemäße Verpackungsfolie eine hohe mechanische Beständigkeit und eine hohe Dichtigkeit, insbesondere gegenüber Luft auf. Sie läßt sich über einen breiten Siegeltemperaturbereich hinweg gut verarbeiten und zeigt gute Eigenschaften hinsichtlich ihrer Abziehbarkeit.

Die erfindungsgemäßen Verpackungsfolien eignen sich aufgrund ihrer guten Abziehbarkeit insbesondere für den Lebensmittelbereich. Darüber hinaus können sie auch als Verpackungsmaterialien für andere Konsumbereiche, beispielsweise im Unterhaltungsbereich eingesetzt werden.

### Beispiele

### I. Herstellung einer erfindungsgemäßen Verpackungsfolie

Durch Breitschlitzextrusion über einen Hauptextruder (Schneckendurchmesser 90 mm; Schneckenlänge 25 x Durchmesser), in welchem die Hauptschicht plastifiziert wurde und über einen Nebenextruder (Schneckendurchmesser 45 mm; Schneckenlänge 25 x Durchmesser) zur Plastifizierung der Siegelschicht a) wurden coextrudierte Folien hergestellt.

Die aus beiden Extrudern kommenden Schmelzeströme wurden dabei über ein Adaptersystem zusammengeführt, übereinandergeschichtet und über eine Breitschlitzdüse ausgetragen. Die Massetemperatur im Hauptextruder betrug jeweils 245°C, im Nebenextruder lag sie zwischen 225 und 240°C.

Die dabei erhaltenen Folien bestanden aus einer Siegelschicht a) mit einer Schichtdicke von 10 µm und einer Trägerschicht b) mit einer Schichtdicke von 75 µm.

Die Trägerschicht b) bestand dabei aus einem Propylencopolymerisat mit 7,0 Gew.-% einpolymerisiertem Ethylen und einem Schmelzflußindex von 4,0 g/10 min, bei 230°C und 2,16 kg, nach DIN 53735. Die Siegelschicht a) bestand aus den in der nachfolgenden Tabelle beschriebenen Polymerisatmischungen. Beide Schichten wurden jeweils ohne Verwendung eines Haftvermittlers coextrudiert.

### II. Eigenschaften der erfindungsgemäßen Verpackungsfolie

Die unter (I) erhaltene Verpackungsfolie wurde im Hinblick auf ihre Siegel- und Abziehfähigkeit hin untersucht.

Dabei wurde die Verpackungsfolie auf eine Propylenhomopolymerfolie mit einem Schmelzflußindex von 3,5 g/10 min., bei 230⁰C und 2,16 kg, nach DIN 53 735 und einer Schichtdicke von 200 µm aufgesiegelt. Die Auflagefläche des Siegelbalkens betrug dabei 150 x 10 mm, der Siegeldruck 0,7 N/mm² und die Siegelzeit 0,5 Sekunden. Die Siegeltemperaturen lagen zwischen 110 und 180°C. Die auf diese Weise erzeugten Siegelnähte wurden im Zugversuch nach ISO 527 geprüft, um die Güte der Siegelnaht bzw. die zum Öffnen der Naht benötigten Abziehkräfte zu ermitteln.

Dazu wurden die freien Enden der miteinander versiegelten Folien in die Zugprüfmaschine eingespannt und im Winkel von 180°C auseinandergezogen. Die Probenbreite betrug 15 mm, die Abzugsgeschwindigkeit 100 mm/min.

Die zum Aufschälen der Naht benötigte Abziehkraft wurde dabei jeweils in Abhängigkeit von der Siegeltemperatur registriert. Wünschenswert sind dabei Abziehkräfte (Schälkräfte), die bereits bei niedrigen Siegeltemperaturen nicht zu hoch liegen.

Von den erhaltenen Folien wurde die Siegelschicht ferner auf ihre Transparenz hin untersucht.

Die Ergebnisse dieser Messungen können der nachfolgenden Tabelle entnommen werden.

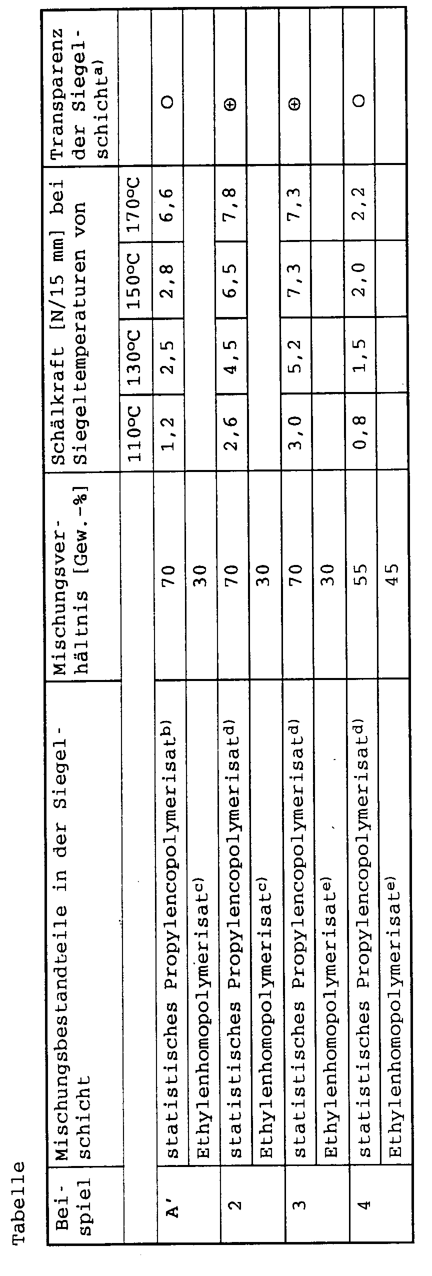

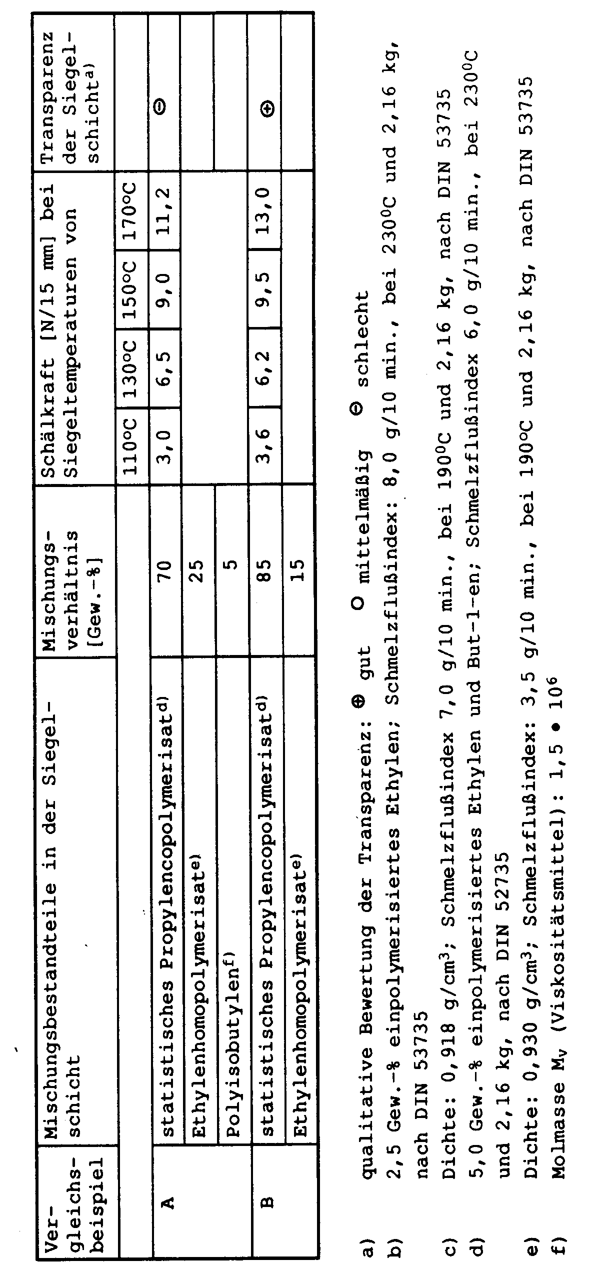

Der Vergleich zwischen den erfindungsgemäßen Beispielen 2 bis 4 und den Vergleichsbeispielen A', A und B zeigt, daß die erfindungsgemäßen Verpackungsfolien bei gleicher Siegeltemperatur leichter abgezogen werden können (geringere Schälkraft). Darüber hinaus zeigt die Folie des Vergleichsbeispiels A eine schlechte Transparenz der Siegelschicht, verglichen mit der der Beispiele 2 bis 4.

## Patentansprüche

1. Verpackungsfolie, enthaltend
a) eine Siegelschicht aus einer Mischung aus 50 bis 80 Gew.-% eines statistischen Terpolymerisats (I) aus 90 bis 97 Gew.-% Propylen, 2 bis 6 Gew.-% Ethylen und 1 bis 6 Gew.-% eines C₄- bis C₁₀-Alk-1-ens und 20 bis 50 Gew.-% wenigstens eines Homopolymerisats des Ethylens mit Dichten von 0,890 bis 0,980 g/cm³ oder eines Copolymerisats des Ethylens mit untergeordneten Anteilen von Vinylacetat oder von C₃- bis C₁₀-Alk-1-enen (II)
b) und eine Trägerschicht aus einem Propylenpolymerisat, welches sowohl vom Terpolymerisat (I) als auch vom Homo- oder Copolymerisat des Ethylens (II) verschieden ist.

2. Verpackungsfolie nach Anspruch 1, wobei eine Siegelschicht a) verwendet wird, die 60 bis 80 Gew.-% eines statistischen Terpolymerisats (I) und 20 bis 40 Gew.-% wenigstens eines Ethylenpolymerisats (II) enthält.

3. Verpackungsfolie nach den Ansprüchen 1 oder 2, wobei die Siegelschicht a) ein statistisches Terpolymerisat (I) enthält, das aus 92 bis 95 Gew.-% Propylen, 3 bis 5 Gew.-% Ethylen und 1,5 bis 4 Gew.-% eines C₄-bis C₁₀-Alk-1-ens besteht.

4. Verpackungsfolie nach den Ansprüchen 1 bis 3, wobei die Siegelschicht a) ein statistisches Terpolymerisat (I) enthält, bei dem als C₄-bis C₁₀-Alk-1-en But-1-en verwendet wird.

5. Verpackungsfolie nach den Ansprüchen 1 bis 4, wobei eine Siegelschicht a) verwendet wird, die ein Ethylenpolymerisat (II) mit einem Dichtebereich von 0,900 bis 0,935 g/cm³ enthält.

6. Verpackungsfolie nach den Ansprüchen 1 bis 5, wobei die Siegelschicht a) eine Schichtdicke von 2 bis 20 µm und die Trägerschicht b) eine Schichtdicke von 30 bis 350 µm aufweist.

7. Verfahren zur Herstellung einer Verpackungsfolie gemäß den Ansprüchen 1 bis 6, dadurch gekennzeichnet, daß zunächst die Mischung der Siegelschicht a) und das thermoplastische Polymere der Trägerschicht b) im geschmolzenen Zustand in einem Extruder miteinander coextrudiert werden und anschließend als Verbund aus dem Extruder ausgetragen, abgezogen und abgekühlt werden.

8. Verwendung der Verpackungsfolie gemäß den Ansprüchen 1 bis 6 im Lebensmittelbereich.

## Claims

1. A packaging film containing
a) a sealing layer of a mixture of from 50 to 80% by weight of a random terpolymer (I) of from 90 to 97% by weight of propylene, from 2 to 6% by weight of ethylene and from 1 to 6% by weight of a C₄-C₁₀-alk-1-ene and from 20 to 50% by weight of at least one ethylene homopolymer having a density of from 0.890 to 0.980 g/cm³ or of at least one ethylene copolymer containing minor amounts of vinyl acetate or of C₃-C₁₀-alk-1-enes (II)
b) and a substrate layer of a propylene polymer which differs both from the terpolymer (I) and from the ethylene homopolymer or copolymer.

2. A packaging film as claimed in claim 1, wherein a sealing layer a) which contains from 60 to 80% by weight of a random terpolymer (I) and from 20 to 40% by weight of at least one ethylene polymer (II) is used.

3. A packaging film as claimed in claim 1 or 2, wherein the sealing layer a) contains a random terpolymer (I) which consists of from 92 to 95% by weight of propylene, from 3 to 5% by weight of ethylene and from 1.5 to 4% by weight of a C₄-C₁₀-alk-1-ene.

4. A packaging film as claimed in any of claims 1 to 3, wherein the dealing layer a) contains a random terpolymer (I) in which but-1-ene is used as the C₄-C₁₀-alk-1-ene.

5. A packaging film as claimed in any of claims 1 to 4, wherein a sealing layer a) which contains an ethylene polymer (II) having a density of from 0.900 to 0.935 g/cm³ is used.

6. A packaging film as claimed in any of claims 1 to 5, wherein the sealing layer a) has a layer thickness of from 2 to 20 µm and the substrate layer b) has a layer thickness of from 30 to 350 µm.

7. A process for the production of a packaging film as claimed in any of claims 1 to 6, wherein the mixture of the sealing layer a) and the thermoplastic polymer of the substrate layer b) in the molten state are first coextruded with one another in an extruder and then extruded as a laminate from the extruder, removed and cooled.

8. Use of a packaging film as claimed in any of claims 1 to 6 in the food sector.

## Revendications

1. Feuille d'emballage, qui contient
a) une couche d'étanchéité constituée d'un mélange de 50 à 80% en poids d'un terpolymère stochastique ou statistique (I) formé de 90 à 97% en poids de propylène, de 2 à 6% en poids d'éthylène et de 1 à 6% en poids d'un alc-1-ène en C₄ à C₁₀ et de 20 à 50% en poids d'au moins un homopolymère de l'éthylène avec des masses volumiques de 0,890 à 0,980 g/cm³, ou d'un copolymère de l'éthylène avec des proportions inférieures d'acétate de vinyle ou d'alc-1-ènes en C₄ à C₁₀ (II),
b) et une couche de support constituée d'un polymère du propylène, qui est différent aussi bien du terpolymère (I) qu'également d'un homopolymère ou d'un copolymère de l'éthylène (II).

2. Feuille d'emballage suivant la revendication 1, caractérisée en ce que l'on utilise une couche d'étanchéité a), qui contient 60 à 80% en poids d'un terpolymère statistique ou stochastique (I) et 20 à 40% en poids d'au moins un polymère de l'éthylène (II).

3. Feuille d'emballage suivant la revendication 1 ou 2, caractérisée en ce que la couche d'étanchéité a) contient un terpolymère stochastique ou statistique (I) qui se compose de 92 à 95% en poids de propylène, de 3 à 5% en poids d'éthylène et de 1,5 à 4% en poids d'un alc-1-ène C₄ à C₁₀.

4. Feuille d'emballage suivant les revendications 1 à 3, caractérisée en ce que la couche d'étanchéité a) contient un terpolymère stochastique ou statistique (I) avec lequel on utilise du but-1-ène, à titre d'alc-1-ène en C₄ à C₁₀.

5. Feuille d'emballage suivant les revendications 1 à 4, caractérisée en ce que l'on utilise une couche d'étanchéité a) qui contient un polymère de l'éthylène (II) avec une plage de masses volumiques de 0,900 à 0,935 g/cm³.

6. Feuille d'emballage suivant les revendications 1 à 5, caractérisée en ce que la couche d'étanchéité a) présente une épaisseur de 2 à 20 µm et la couche de support b) présente une épaisseur de 30 à 350 µm.

7. Procédé de fabrication d'une feuille d'emballage suivant les revendications 1 à 6, caractérisé en ce que l'on extrude conjointement mutuellement d'abord le mélange de la couche d'étanchéité a) et le polymère thermoplastique de la couche de support b), à l'état fondu, dans une extrudeuse et la masse fondue est ensuite sortie de l'extrudeuse, prélevée et refroidie, sous forme de lamifié.

8. Utilisation de la feuille d'emballage suivant les revendications 1 à 6, dans le domaine des produits alimentaires.
